# EUROPEAN PATENT APPLICATION

(11) **EP 3 689 794 A1**
(43) Date of publication of application: **05.08.2020**
(21) Application number: 20152908.8
(22) Date of filing: 21.01.2020
(51) Int. Cl.: B65G 11/00, B65G 11/16

(54) **CHUTE FOR TRANSFERRING FLOWABLE PARTICULATE MATERIAL**

(30) Priority: 30.01.2019 GB 201901240
(71) Applicant: CDE Global Limited, Cookstown, County Tyrone BT80 9HJ (GB)
(72) Inventor: CONVERY, Anthony, Moneymore, County L/Derry BT45 7NG (GB)
(74) Representative: FRKelly

(57) **Abstract**

A chute comprising at least one wall defining a conveying surface, an abrasion resistant wear liner being attached said at least one wall to cover at least part of said conveying surface, wherein said wall includes one or more apertures therein covered by said abrasion resistant wear liner when attached to said at least one wall, whereby said one or more apertures expose at least a portion of said wear liner to an exterior of said chute.

## Description

### FIELD OF THE INVENTION

This invention relates to a chute for transferring flowable particulate material and in particular to a chute for transferring flowable particulate material having an abrasion resistant wear liner on the conveying surfaces of the chute.

### BACKGROUND OF THE INVENTION

Chutes are commonly used to transfer flowable particulate material, such as minerals, sand or aggregate, under gravity between stages of a material processing apparatus, for example between conveyors and screens or hoppers.

The conveying surfaces of such chutes undergo abrasion due to the hard or chemically aggressive material being transported thereon. Therefore chutes are commonly provided with a sacrificial abrasion resistant wear liner, comprising plates, tiles or sheets of an abrasion resistant material, on their conveying surfaces that can be periodically replaced when worn out.

However, the only way to inspect the condition of such a wear liner is to shut down the apparatus and visually inspect the wear liner for excessive damage. This process is made more difficult by the location of the wear liner on the inner faces of a chute having restricted space and to which accessibility may be limited. Therefore excessive wear of the wear liner may go unnoticed until the wear liner becomes perforated, subsequently leading to damage to the walls of the chute itself. This may then require damaged sections of the chute walls to be cut out and new sections to be welded in in a time consuming and labour intensive operation.

### SUMMARY OF THE INVENTION

According to the present invention there is provided a chute comprising at least one wall defining a conveying surface, an abrasion resistant wear liner being attached said at least one wall to cover at least part of said conveying surface, wherein said wall includes one or more apertures therein covered by said abrasion resistant wear liner when attached to said at least one wall, whereby said one or more apertures expose at least a portion of said wear liner to an exterior of said chute.

Said one or more apertures may have an area of at least 50% of the surface area of said abrasion resistant wear liner.

In a preferred embodiment said wear liner may comprise one or more plates, tiles or sheets of an abrasion resistant material releasably attached to said wall.

The wear liner may comprise a plurality of contiguous sections, at least a respective one of said one or more apertures being aligned with each section of the wear liner such that at least a portion of each of said sections of the wear liner is exposed to an exterior of the chute via said respective apertures. The at least one wall may comprise a peripheral border region and a plurality of interconnected elongate webs and/or reinforcing members, said apertures being defined between said peripheral border region and/or between said plurality of interconnected elongate webs and/or reinforcing members.

In one embodiment the wear liner may be coupled to said at least one wall by releasable fasteners, such as threaded fasteners (e.g. nuts and bolts).

The chute may be defined by a plurality of walls defining a duct having an inlet and an upper end, wherein said conveying surface is defined by inner faces of said duct. Said plurality of walls may comprise a front wall, a rear wall and first and second side walls linking said front and rear walls. Said front, rear and side walls of the chute may be coupled to one another by releasable fasteners, such as threaded fasteners (e.g. nuts and bolts).

### BRIEF DESCRIPTION OF THE DRAWINGS

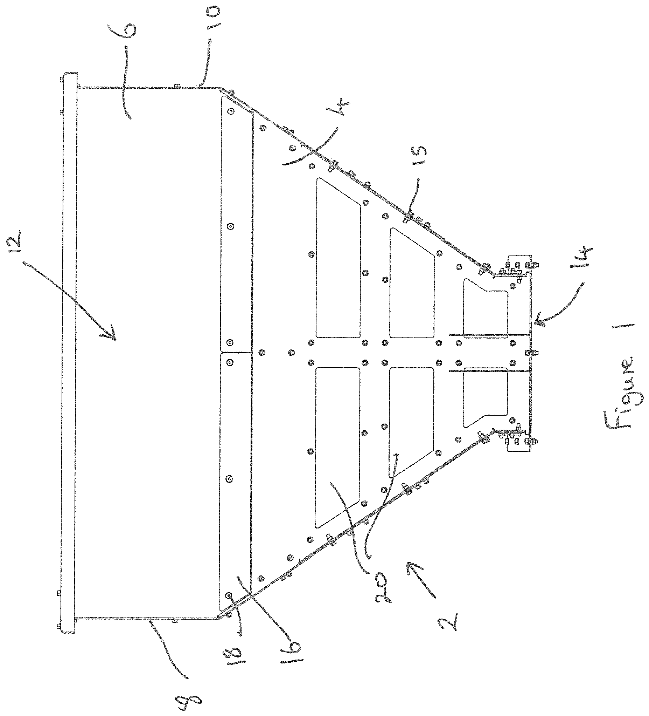

A chute in accordance with an embodiment of the present invention will now be described, by way of example only, with reference to the accompanying drawings, in which :-
Figure 1 is a front view of a chute in accordance with an embodiment of the present invention;

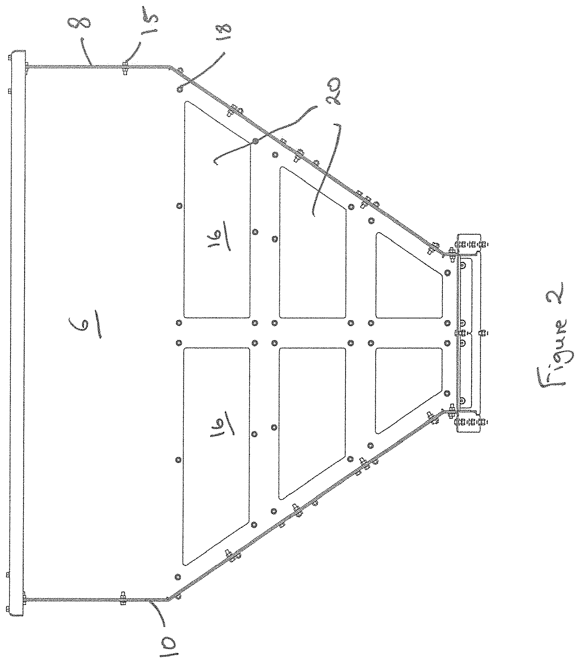

Figure 2 is a rear view of the chute of Figure 1;

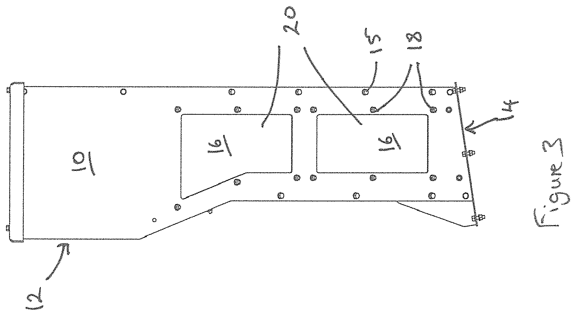

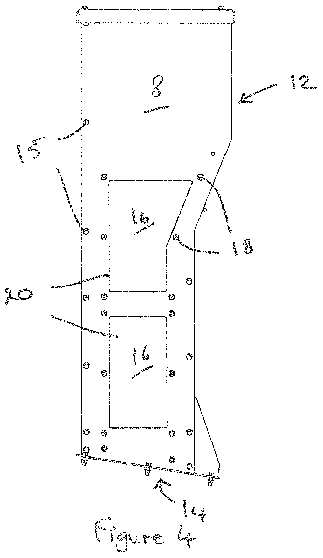

Figures 3 and 4 are respective side views of the chute of Figure 1;

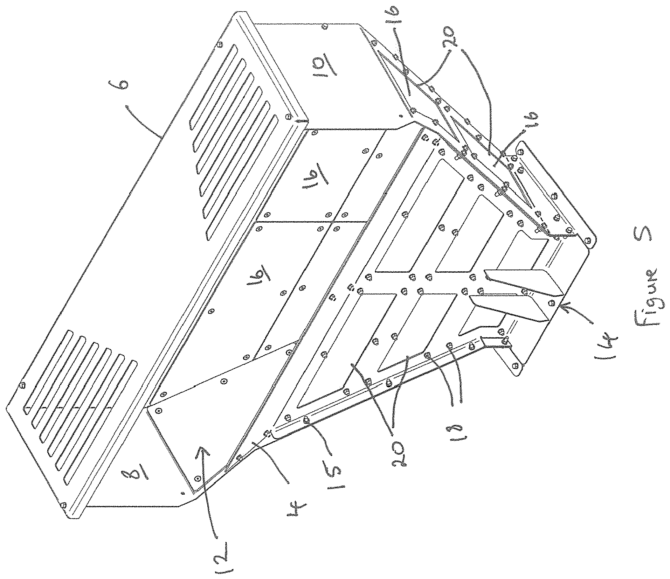

Figure 5 is a perspective view of the chute of Figure 1; and

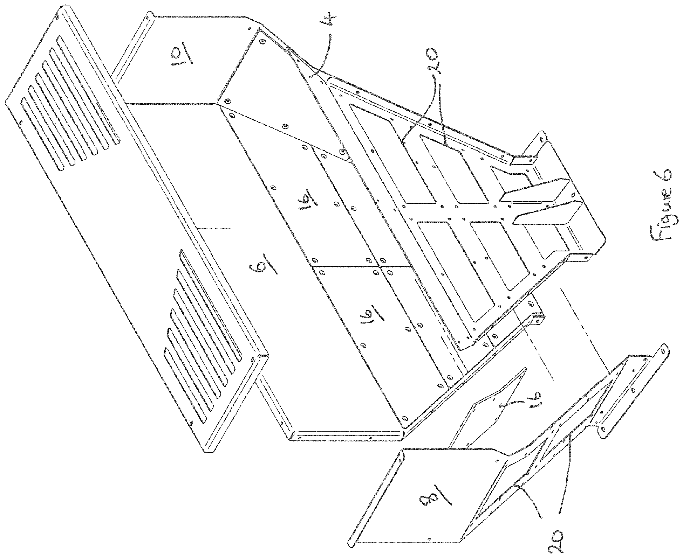

Figure 6 is a partially exploded view of the chute of Figure 1

### DETAILED DESCRIPTION OF THE DRAWINGS

As illustrated in the drawings, a chute for transferring flowable particulate material in accordance with an embodiment of the present invention comprises a front wall 4, a rear wall 6 and first and second side walls 8,10 linking said front and rear walls 4,6 to define an enclosed duct having an inlet 12 at an upper end and an outlet 14 at a lower end. The walls 4,6,8,10 of the chute 2 may be formed from sheet steel, preferably by means of a stamping or pressing procedure.

Preferably the front, rear and side walls 4,6,8,10 of the chute 2 are joined together by means of releasable fasteners, such as nuts and bolts 15, inserted through aligned apertures in cooperating mounting flanges formed on the walls, avoiding the need for welding.

An abrasion resistant wear liner is provided on the conveying surfaces of the chute to define at least part of said conveying surface of the chute. The wear liner is defined by a plurality of contiguous wear plates 16 which are preferably affixed to inner faces of the front, rear and side walls 4,6,8,10 to define abrasion resistant conveying surfaces of the chute 2. The wear plates 16 of the wear liner are preferably attached to the walls 4,6,8,10 of the chute 2 by means of releasable fasteners, such as nuts and bolts 18, avoiding the need for welding and allowing the wear plates 16 to be readily detached for replacement.

Each of the front, rear and side walls 4,6,8,10 of the chute 2 includes a plurality of apertures 20 formed therein arranged to be covered by the wear plates 16 of the wear liner when attached to the walls of the chute, whereby the apertures 16 expose at least a portion of each wear plate 16 of the wear liner to the exterior of the chute 2. Preferably the apertures 20 are dimensioned to match the size of each wear plate 16 while leaving sufficient surrounding wall material to permit secure attachment of each wear plate 16 to the walls 4,6,8,10 of the chute 2 and to provide sufficient support for the wear plates 16 by the walls 4,6,8,10 of the chute 2.

Each wear plate 16 may be formed from a wear resistant material, or may be provided with a wear resistant material on one face thereof. Said abrasion resistant material may comprise a polymeric material, such as rubber, a ceramic material or a metal.

In one embodiment each wear plate 16 may comprise a metal plate, such as a steel plate, having a wear resistant material, such as a ceramic or polymeric material, provided on (for example bonded to) at least one face thereof, said at least one face defining a part of the conveying surfaces of the chute 2 when the wear plates 16 are attached to the walls 4,6,8,10 of the chute 2.

By exposing at least a portion of each wear plate 16 of the wear liner on an outer side of the chute 2 via the apertures 20 in the walls 4,6,8,10 of the chute 2, perforation of any wear plates 16 due to abrasion will be readily identifiable by means of a visual inspection of the exterior of the chute without needing access to the inside of the chute and without decommissioning the apparatus. The bolted assembly of the wear plates 16 and walls 4,6,8,10 of the chute 2 will facilitate replacement of worn wear plates 16. Furthermore, any such perforation of the wear plates 16 will generally not lead to subsequent deterioration or damage of the walls 4,6,8,10 of the chute 2.

The provision of apertures 20 in the walls 4,6,8,10 will also serve to reduce the overall weight of the chute 2.

The invention is not limited to the embodiment described herein but can be amended or modified without departing from the scope of the present invention as defined in the appended claims.

## Claims

1. A chute comprising at least one wall (4,6,8,10) defining a conveying surface, an abrasion resistant wear liner (16) being attached said at least one wall to cover at least part of said conveying surface, **characterised in that** said wall includes one or more apertures (20) therein covered by said abrasion resistant wear liner when attached to said at least one wall, whereby said one or more apertures (20) expose at least a portion of said wear liner (16) to an exterior of said chute.

2. A chute as claimed in claim 1, wherein said one or more apertures (20) have an area of at least 50% of the surface area of said abrasion resistant wear liner.

3. A chute as claimed in claim 1 or claim 2, wherein said wear liner comprises one or more plates, tiles or sheets (16) of an abrasion resistant material releasably attached to said wall.

4. A chute as claimed in any preceding claim, wherein said wear liner comprises a plurality of contiguous sections, at least a respective one of said one or more apertures (20) being aligned with each section of the wear liner such that at least a portion of each of said sections of the wear liner is exposed to an exterior of the chute via said respective apertures.

5. A chute as claimed in claim 4, wherein said at least one wall comprises a peripheral border region and a plurality of interconnected elongate webs and/or reinforcing members, said apertures being defined between said peripheral border region and/or between said plurality of interconnected elongate webs and/or reinforcing members.

6. A chute as claimed in any preceding claim, wherein said wear liner (16) is coupled to said at least one wall by releasable fasteners.

7. A chute as claimed in claim 6, wherein said releasable fasteners comprise threaded fasteners (18).

8. A chute as claimed in any preceding claim comprising a plurality of walls defining a duct having an inlet and an upper end, wherein said conveying surface is defined by inner faces of said duct.

9. A chute as claimed in claim 8, wherein said plurality of walls comprise a front wall (4), a rear wall (6) and first and second side walls (8,10) linking said front and rear walls.

10. A chute as claimed in claim 9, wherein said front, rear and side walls (4,6,8,10) are coupled to one another by releasable fasteners (15).

11. A chute as claimed in claim 10, wherein said releasable fasteners comprises threaded fasteners (15).
